(19) Europäisches Patentamt
European Patent Office
Office européen des brevets

(11) EP 4 763 879 A1

# (12) EUROPEAN PATENT APPLICATION

(43) Date of publication:
**24.06.2026 Bulletin 2026/26**

(21) Application number: **24221619.0**

(22) Date of filing: **19.12.2024**

(51) International Patent Classification (IPC):
***C08G 18/02*** (2006.01) ***C08G 18/62*** (2006.01)
***C08G 18/73*** (2006.01) ***C08G 18/79*** (2006.01)
***C09D 175/04*** (2006.01)

(52) Cooperative Patent Classification (CPC):
**C08G 18/792; C08G 18/022; C08G 18/6229; C08G 18/73; C09D 175/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Covestro Deutschland AG**
**51373 Leverkusen (DE)**

(72) Inventors:
- **Latorre Martinez, Irene Cristina**
  **40764 Langenfeld (DE)**
- **Pires, Raul**
  **50670 Köln (DE)**
- **Darmandeh, Heidar**
  **40597 Düsseldorf (DE)**
- **Hebestreit, Tanja**
  **51688 Wipperfürth (DE)**

(74) Representative: **Levpat**
**c/o Covestro AG**
**Gebäude K12**
**51365 Leverkusen (DE)**

## (54) POLYISOCYANATE COMPOSITION

(57) The present invention relates to a polyisocyanate composition comprising oligomers of 2,5-bis(isocyanatomethyl) tetrahydrofuran, wherein the 2,5-bis(isocyanatomethyl) tetrahydrofuran consists of cis-2,5-bis(isocyanatomethyl) tetrahydrofuran and trans-2,5-bis(isocyanatomethyl) tetrahydrofuran in a weight ratio of 1.0:99.0 to 99.9:0.1.

EP 4 763 879 A1

## Description

The invention relates to a polyisocyanate composition comprising or consisting of cis- and trans-2,5-bis(isocyanatomethyl) tetrahydrofuran. The invention further relates to a process for preparing such polyisocyanate composition, to a use of such polyisocyanate composition, to a two-component system comprising the polyisocyanate composition and to the shaped bodies, coatings and composite parts that can be obtained therewith.

The oligomerization or polymerization of isocyanates, especially to form higher molecular weight oligomer mixtures has long been known. The reaction of a relatively small number of isocyanates with one another is referred to as oligomerization. The reaction of a relatively large number of isocyanates is referred to as polymerization. In the context of the present invention, the oligomerization or polymerization of isocyanates described above is referred to collectively as isocyanate modification or modification of isocyanates. All products resulting from such processes are referred to collectively in the present document as polyisocyanate composition or also polyisocyanates for short. The polyisocyanates contain free isocyanate groups, NCO groups for short, which optionally may also have been temporarily deactivated with blocking agents, they are exceptionally high-quality starting materials for the preparation of a multiplicity of polyurethane plastics and coating compositions.

Polyisocyanates employed in coating compositions for high-quality coatings are, in particular, low-monomer derivatives prepared from hexamethylene 1,6-diisocyanate (HDI). Particularly suitable for elastic, highly robust coatings for this purpose are isocyanurate polyisocyanates of HDI, or HDI polyisocyanates containing iminooxadiazinedione and isocyanurate structures, as are described for example in H. J. Laas, R. Halpaap, J. Pedain, J. prakt. Chem. 1994, 336, 185-200. These polyisocyanates generally have isocyanate functionalities ($F_{NCO}$) of 3 or more, where isocyanate functionality refers to the average number of NCO groups per molecule.

There is a steady demand for polyurethane coatings with ever improved properties such as, for example, increased hardness and/or increased resistance against certain chemical agents compared with coatings of the state of the art which include coatings comprising polyurethanes prepared from HDI, pentamethylene 1,5-diisocyanate (PDI) or isophorone diisocyanate (IPDI).

GB936370 describes a generic lab synthesis of monomeric isocyanates of furan and tetrahydrofuran by liquid phase phosgenation of the dihydrochloride salt, which is a rather inefficient and complex process on a larger scale. No further modification or application tests are described.

WO2011/098272A2 describes mixtures of short-chain renewable diisocyanates with long-chain renewable diisocyanates for preparation of a polyurethane. Among the very long list of short-chain renewable diisocyanates furan based diisocyanates are generally mentioned, but neither application examples nor preferences are described.

It was thus an object of the present invention to provide a polyisocyanate composition that results in polyurethane coatings with improved properties, such as, e.g., increased hardness and/or increased resistance against certain chemical agents.

This object has surprisingly been achieved by a polyisocyanate composition comprising or consisting of oligomers of 2,5-bis(isocyanatomethyl) tetrahydrofuran, wherein the 2,5-bis(isocyanatomethyl) tetrahydrofuran consists of cis-2,5-bis(isocyanatomethyl) tetrahydrofuran and trans-2,5-bis(isocyanatomethyl) tetrahydrofuran in a weight ratio of 1.0:99.0 to 99.9:0.1.

The polyisocyanate composition of the invention thus comprises both the cis isomer and the trans isomer of 2,5-bis(isocyanatomethyl) tetrahydrofuran, with the cis and the trans isomers referring to the two isocyanatomethyl moieties residing on the same side or opposite sides, respectively, of the five-membered ring structure of the tetrahydrofuran.

The references to "comprising", "containing", etc. preferably denote "substantially consisting of" and very particularly preferably denote "consisting of".

In the present invention, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

According to this invention, the cis and trans isomers of 2,5-bis(isocyanatomethyl) tetrahydrofuran are jointly referred to as "TEFUDI" and each individually also referred to as "cis-TEFUDI" and "trans-TEFUDI". For sake of clarity, cis-TEFUDI corresponds to the (2R,5S) and (2S,5R) configuration and trans-TEFUDI corresponds to the (2R,5R) and (2S,5S) configuration.

According to one embodiment of the invention, the 2,5-bis(isocyanatomethyl) tetrahydrofuran consists of cis-2,5-bis(isocyanatomethyl) tetrahydrofuran and trans-2,5-bis(isocyanatomethyl) tetrahydrofuran in a weight ratio of 50.0:50.0 to 99.9:0.1, 51.0:49.0 to 99.9:0.1 or 52.0:48.0 to 99.9:0.1, preferably 53.5:46.5 to 99.9:0.1 or 55:45 to 99.9:0.1, more preferably 60.0:40.0 to 99.5:0.5, even more preferably 65.0:35.0 to 99.0: 1.0, most preferably 65.0:35.0 to 95.0:5.0 or 65.0:35.0 to 90.0: 10.0.

In a further embodiment of the invention, the oligomers of 2,5-bis(isocyanatomethyl) tetrahydrofuran comprise isocyanurate, iminooxadiazinedione, allophanate, urethane, urea, uretdione, oxadiazinetrione, carbodiimide, thiourethane, thioallophanate, biuret structures or any combination of two or more of the aforementioned. In accordance with this embodiment, the oligomers of 2,5-bis(isocyanatomethyl) tetrahydrofuran comprise bridging cis- and trans-tetrahydrofuran-2,5-diyl-dimethylene units as structural units which are connected via one exocyclic $CH_2$-moiety to the nitrogen atom of an isocyanate group, to the nitrogen atom of an isocyanurate group, to the nitrogen atom of an iminooxadiazinedione group, to the nitrogen atom of an allophanate group, to the nitrogen atom of a urethane group, to the nitrogen atom of an uretdione group, to the nitrogen atom of an oxadiazinetrione group, to the nitrogen atom of a carbodiimide group, to the nitrogen atom of a thiourethane group, to the nitrogen atom of a thioallophanate group or to the nitrogen atom of a biuret group and which are connected via the other exocyclic $CH_2$-moiety to the nitrogen atom of independently selected any of the before mentioned functional groups. The designation of the two exocyclic $CH_2$-moieties may also be switched. This bridging unit can be detected via standard $^1H$- and/or $^{13}C$-NMR measurements.

Isocyanurate structures or isocyanurate groups are understood as structural units, linked randomly to each other or functional groups in accordance with the oligomeric distribution via the above-described cis- and trans-tetrahydrofuran-2,5-diyl-dimethylene units.

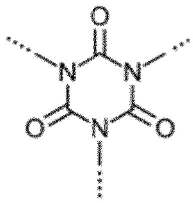

Isocyanurate structure

Iminooxadiazinedione structures (also referred to as iminooxadiazinedione groups) are understood as structural units, linked randomly to each other or functional groups in accordance with the oligomeric distribution via the above-described cis- and/or trans-tetrahydrofuran-2,5-diyl-dimethylene units.

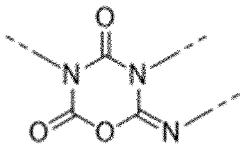

Iminooxadiazinedione structure

Allophanate structures (also referred to as allophanate groups) are understood as units, linked randomly to each other or functional groups in accordance with the oligomeric distribution via the above-described cis- and/or trans-tetrahydrofuran-2,5-diyl-dimethylene units.

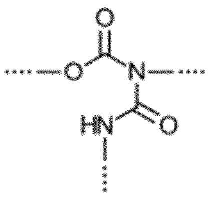

Allophanate structure

The existence of the beforementioned isocyanurate, iminooxadiazinedione and/or allophanate structures can be determined by standard $^1H$- and/or $^{13}C$-NMR measurements.

In a preferred embodiment of the invention, the polyisocyanate composition further comprises oligomers of a diisocyanate different from cis-2,5-bis(isocyanatomethyl) tetrahydrofuran and trans-2,5-bis(isocyanatomethyl) tetrahydrofuran, for example PDI, HDI, 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), IPDI, 1,3- and 1,4-bis(isocyanatomethyl)benzene (XDI), 1,3- and 1,4-bis(isocyanatomethyl) cyclohexane (H6XDI), tolylene 2,4- and 2,6-diisocyanate (TDI), bis(4-isocyanatophenyl)methane (4,4'MDI), 4-isocyanatophenyl-2-isocyanatophenylmethane (2,4'MDI) and polycyclic products obtainable by formaldehyde-aniline polycondensation and subsequent conversion of the resulting (poly)amines to the corresponding (poly)isocyanates (polymer MDI).

In case the polyisocyanate composition comprises further oligomers different from cis-2,5-bis(isocyanatomethyl) tetrahydrofuran and trans-2,5-bis(isocyanatomethyl) tetrahydrofuran, preference is given to PDI, HDI, 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI) and/or 1,3- and 1,4-bis(isocyanatomethyl)cyclohexane (H6XDI). Particular preference is given to PDI, HDI, 2,4,4-trimethylhexane 1,6-diisocyanate, 2,2,4-trimethylhexane 1,6-diisocyanate, 4-isocyanatomethyloctane and/or 1,8-diisocyanate, and even more preference is given to PDI and/or HDI.

The amount of the optional further isocyanates different from the essential cis-2,5-bis(isocyanatomethyl) tetrahydrofuran and trans-2,5-bis(isocyanatomethyl) tetrahydrofuran is guided by the specific application and, if they are used at all, may vary within wide limits, preferably between 0.01 and 5.0% by weight, preferably between 0.01 and 2.0% by weight, more preferably between 0.01 and 1.0% by weight, based on the total amount of monomeric compounds that have NCO groups.

In a preferred embodiment, the inventive polyisocyanate composition is characterized in that it has an NCO content determined in accordance with DIN EN ISO 11909:2007-05 of from 5.8 to 25.9% by weight, preferably from 7.8 to 24.9% by weight, particularly preferably from 9.7 to 23.9% by weight, based on the total weight of the polyisocyanate composition.

In a preferred embodiment, the inventive polyisocyanate composition is characterized in that it has a residual monomeric 2,5-bis(isocyanatomethyl) tetrahydrofuran content of less than 1.0% by weight, preferably less than 0.5% by weight and more preferably less than 0.1% by weight, based on the total weight of the polyisocyanate composition. The residual monomeric 2,5-bis(isocyanatomethyl) tetrahydrofuran content is determined by gas chromatography in accordance with DIN EN ISO 10283:2007-11 with internal standard.

It is, for the purpose of this invention, irrelevant by which processes the abovementioned isocyanates, in particular diisocyanates including the cis- and trans-2,5-bis(isocyanatomethyl) tetrahydrofuran, are generated, i.e., with or without use of phosgene. Preferred in the industrial production of the isocyanates is the phosgenation in the liquid-phase or the gas-phase and even more preferred by gas-phase phosgenation as described for example in EP 0 764 633 A2.

The inventive polyisocyanate composition is also suitable for one-component systems in which essentially all free isocyanate groups having been deactivated with one or more blocking agents. The deactivated isocyanate groups or the blocked polyisocyanate composition can be produced, for example, by allowing the polyisocyanate composition to react with a blocking agent. Examples of blocking agents include blocking agents of oxime, phenol, alcohol, imine, amine, carbamic acid, urea, imidazole, imide, mercaptan, active methylene, acid amide (lactam) and bisulfites.

One aspect of the invention is directed to a process for preparing the inventive polyisocyanate composition comprising the steps of

a.i. provision of an isocyanate mixture comprising cis-2,5-bis(isocyanatomethyl) tetrahydrofuran and trans-2,5-bis(isocyanatomethyl) tetrahydrofuran in a weight ratio of 1.0:99.0 to 99.9:0.1,
a.ii. oligomerization of the isocyanate mixture provided in step a.i, optionally in the presence of a catalyst, optionally in the presence of further coreactants selected from the group of alcohols, thiols, amines, water, $CO_2$, or else further isocyanates having an NCO functionality > 1, to obtain the polyisocyanate composition;
or
b.i. provision of a first isocyanate composition comprising cis-2,5-bis(isocyanatomethyl) tetrahydrofuran and a second isocyanate composition comprising trans-2,5-bis(isocyanatomethyl) tetrahydrofuran,
b.ii. oligomerization of the first isocyanate composition provided in step b.i, optionally in the presence of a catalyst, optionally in the presence of further coreactants selected from the group of alcohols, thiols, amines, water, $CO_2$, or else further isocyanates having an NCO functionality > 1, to obtain a first oligomerized isocyanate composition,
b.iii. oligomerization of the second isocyanate composition provided in step b.i, optionally in the presence of a catalyst, optionally in the presence of further coreactants selected from the group of alcohols, thiols, amines, water, $CO_2$, or else further isocyanates having an NCO functionality > 1, to obtain a second oligomerized isocyanate composition,
b.iv. mixture of the first and second oligomerized isocyanate composition obtained in steps b.ii and b.iii, respectively, to obtain the polyisocyanate composition.

The inventive process thus comprises an oligomerization step which is either conducted with a mixture of cis- and trans-2,5-bis(isocyanatomethyl) tetrahydrofuran or with two separate compounds one of which comprises cis-2,5-bis(isocyanatomethyl) tetrahydrofuran and the other comprising trans-2,5-bis(isocyanatomethyl) tetrahydrofuran. When the oligomerization is conducted on two separate compounds, the oligomerization products of the two compounds are mixed to obtain the inventive polyisocyanate composition.

The precursor for the 2,5-bis(isocyanatomethyl) tetrahydrofuran of the invention can be obtained from different sources but is preferably from a biobased source.

In general, the cis-2,5-bis(isocyanatomethyl) tetrahydrofuran and trans-2,5-bis(isocyanatomethyl) tetrahydrofuran monomers are used in the inventive process to obtain the inventive polyisocyanate composition by forming the bridging units between isocyanurate, iminooxadiazinedione, allophanate, urethane, urea, uretdione, oxadiazinetrione, carbodiimide, thiourethane, thioallophanate and/or biuret structures. Such a modification of TEFUDI can be done

according to methods for example described in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 and EP-A 3 337 836.

Coreactants optionally used for the inventive process and optionally most likely contained in reacted form in the inventive polyisocyanate composition, in addition to the cis- and trans-2,5-bis(isocyanatomethyl) tetrahydrofuran themselves, may be the usually bi- or higher-functional coreactants having Zerevitinoff-active hydrogen that are customary in polyurethane chemistry, for example water, alcohols, thiols and amines. These compounds preferably have an average OH, NH or SH functionality of at least 1.5. These may, for example, be low molecular weight diols (e.g. ethane-1,2-diol, propane-1,3- or -1,2-diol, butane-1,4-diol), triols (e.g., glycerol, trimethylolpropane) and tetraols (e.g., pentaerythritol), short-chain polyamines, but also polyaspartic esters, polythiols and/or polyhydroxy compounds such as polyether polyols, polyester polyols, polyurethane polyols, polysiloxane polyols, polycarbonate polyols, polyether polyamines, polybutadiene polyols, polyacrylate polyols and/or polymethacrylate polyols, and the copolymers thereof.

The optionally comprised further isocyanates having an NCO functionality > 1 in the inventive process are preferably selected from the abovementioned lists.

As catalysts to be optionally used for the NCO-NCO reactions, e.g., to form the isocyanurate, iminooxadiazindione and/or allophanate structures from the cis- and trans-2,5-bis(isocyanatomethyl) tetrahydrofuran, the typical compounds known to be catalytically active to isocyanates are suitable. These catalysts include, in addition to compounds of ionic structure for example with "onium" cations (ammonium, phosphonium, etc.) and nucleophilic anions such as hydroxide, alkanoate, carboxylate, heterocycles having at least one negatively charged nitrogen atom in the ring, especially azolate, imidazolate, triazolate, tetrazolate, fluoride, hydrogendifluoride, higher polyfluorides or mixtures of these (adducts of more than one equivalent of HF onto compounds containing fluoride ions), it being possible for the fluorides, hydrogendifluorides and higher polyfluorides to lead under suitable reaction conditions to products having a higher iminooxadiazinedione group content, also neutral bases such as tertiary amines or phosphanes (phosphines). Especially in the latter case structural variation makes it possible to cover a wide selectivity range; from high uretdione selectivity through to high "trimer" selectivity, the latter typically resulting in mixtures of isocyanurates and iminooxadiazinediones.

The optional catalysts may be used individually or in any desired mixtures of any two or more thereof. For instance, the solutions of quaternary ammonium hydroxides in various alcohols, depending on the pKa value of the base and of the alcohol used, are present partially or completely as ammonium salts with alkoxide anion. This equilibrium can be shifted wholly to the side of complete alkoxide formation by removing the water of reaction resulting from this reaction. Suitable methods for water removal in this case are all methods known from literature for this purpose, in particular (azeotropic) distillation, this optionally being with the aid of a suitable entrainer if the alcohol used as solvent is not suitable as such.

The progress of the reaction in the process of the invention can be monitored by determining the NCO content by titrimetric means as per DIN EN ISO 11909:2007-05. On attainment of the desired NCO content ("degree of polymerization") the reaction is stopped by suitable means depending on the modification reaction and/or the use of a catalyst or not. Preferably catalysts are deactivated by addition of suitable catalyst poisons.

According to a further preferred embodiment, the reaction is taken to a point where the reaction mixture has a degree of oligomerization of 10% to 40%, preferably of 15% to 30%.

"Degree of oligomerization" presently refers to the percentage of the isocyanate groups originally present in the starting mixture that is consumed during the reaction according to the invention. The degree of oligomerization in percent can be calculated according to the following formula:

$$\text{Degree of oligomerization} = (\text{NCO start} - \text{NCO end}) / \text{NCO start} \times 100.$$

The reaction can be discontinued, for example, when the target degree of oligomerization has been reached. This degree of oligomerization is reached generally after a reaction time of 30 minutes to 8 hours, preferably of 1 to 6 hours.

The reaction may be terminated for example by cooling of the reaction mixture to ambient temperature, in particular 20 - 25 °C. In general, however, the reaction is ended by addition of a catalyst poison and optional subsequent brief heating of the reaction mixture to a temperature above 80 °C, for example.

Examples of suitable catalyst poisons are inorganic acids such as hydrochloric acid, phosphorous acid or phosphoric acid, acyl chlorides such as acetyl chloride, benzoyl chloride or isophthaloyl dichloride, sulfonic acids and sulfonic esters, such as methanesulfonic acid, p-toluenesulfonic acid, trifluoromethanesulfonic acid, perfluorobutane sulfonic acid, dodecylbenzenesulfonic acid, methyl and ethyl p-toluenesulfonates, monoalkyl and dialkyl phosphates such as monotridecyl phosphate, dibutyl phosphate, and dioctyl phosphate, and also silylated acids, such as trimethylsilyl methanesulfonate, trimethylsilyl trifluoromethanesulfonate, tris(trimethylsilyl) phosphate, and diethyl trimethylsilyl phosphate.

The amount of catalyst poison needed to end the reaction depends on the amount of catalyst used; in general, an equivalent amount (100 equivalent%) of the catalyst poison is used, based on the catalyst used at the start. Taking into account losses of catalyst potentially occurring during the reaction, 20 to 80 equivalent% of the catalyst poison, based on the amount of catalyst originally used, may also be sufficient to end the reaction.

The stated catalyst poisons may be used either as they are or else in solution in a suitable solvent. If a solvent is employed for dissolving the catalyst poison, preference is given to TEFUDI. The degree of dilution may be selected freely within a very wide range; for example, suitable solutions are those starting from a concentration of ≥25.0% by weight, preferably ≥10.0% by weight.

After the end of reaction, the reaction mixture may be preferably freed from volatile constituents (excess monomeric isocyanate components and any solvents additionally used), preferably by thin-film distillation under reduced pressure, for example at a pressure of below 1.0 mbar, preferably below 0.75 mbar, more preferably below 0.25 mbar, under extremely gentle conditions, as for example at a temperature of 100 to 200 °C, preferably of 120 to 180 °C.

In another embodiment of the process of the invention, said volatile constituents are removed by extraction with suitable solvents that are inert toward isocyanate groups, examples being aliphatic or cycloaliphatic hydrocarbons such as pentane, hexane, heptane, cyclopentane or cyclohexane, from the polyisocyanate composition.

The process of the invention is preferably conducted without solvent. If desired, however, suitable solvents inert toward the reactive groups of the starting components can also be used. Suitable solvents are, for example, the customary paint solvents that are known per se such as ethyl acetate, butyl acetate, ethylene glycol monomethyl or monoethyl ether acetate, 1-methoxyprop-2-yl acetate, 3-methoxy-n-butyl acetate, acetone, 2-butanone, 4-methyl-2-pentanone, cyclohexanone, toluene, xylene, chlorobenzene, white spirit, more highly substituted aromatics, of the kind available commercially, for example, under the names Solventnaphtha, Solvesso®, Isopar®, Nappar®, Varsol® (ExxonMobil Chemical Central Europe, Cologne, Germany) and Shellsol® (Shell 35 Deutschland Oil GmbH, Hamburg, Germany), and also solvents such as propylene glycol diacetate, diethylene glycol dimethyl ether, dipropylene glycol dimethyl ether, diethylene glycol ethyl and butyl ether acetate, N-methylpyrrolidone and N-methylcaprolactam, or any combination of two or more of the aforementioned.

Independent of the optional use of a solvent during the modification reaction of TEFUDI to form the polyisocyanate composition, the inventive process optionally comprises a step of addition of at least one solvent inert towards isocyanate groups to reach a preferred viscosity of < 2000 mPas at 23 °C measured according to DIN EN ISO 3219:1994-10. Such optional solvent or mixture of solvents is preferably selected from the aforementioned. In case such an optional step is conducted, a suitable solvent is preferably added in an amount to achieve a solids content of >50% by weight, more preferably a solids content of >80% by weight and most preferably a solids content of >95% by weight.

Another aspect of the present invention is a polyisocyanate composition obtainable or obtained, preferably directly obtained, by the inventive process. This polyisocyanate composition is thus based on cis- and trans-2,5-bis(isocyanatomethyl) tetrahydrofuran and obtainable or obtained by oligomerization as described above. For the purpose of this application, the polyisocyanate composition obtainable or obtained, preferably directly obtained, by the inventive process is expressly included by the term "inventive polyisocyanate composition".

As an alternative or even further preferred embodiment, mixtures of the inventive polyisocyanate composition with at least one other polyisocyanate are another aspect of the present invention. Such inventive polyisocyanate mixtures exhibit the same positive technical effects, because of the inventive polyisocyanate composition based on TEFUDI, with the additional benefit to further improve specific properties depending on and required by the desired application. Suitable other polyisocyanates are in general all kinds of polyisocyanates prepared by modification of simple aliphatic, cycloaliphatic, araliphatic and/or aromatic diisocyanates and/or triisocyanates, for example those of the above-mentioned type, with uretdione, isocyanurate, allophanate, biuret, iminooxadiazinedione and/or oxadiazine trione structure, such as those used and described for example in J. Prakt. Chem. 336 (1994) 185 - 200, in DE-A 1,670,666, DE-A 1,954,093,25 DE-A 2,414,413, DE-A 2,452,532, DE-A 2,641,380, DE-A 3,700,209, DE-A 3,900,053 and DE-A 3,928,503 or in EP-A 0,336,205, EP-A 0,339,396 EP-A 0,798,299, EP-A 0,962,454, EP-A 0,962,455, EP-A 2,785,760, EP-A 2,883,895, EP-A 3,107,922, EP-A 3,107,948 and EP-A 3,337,836. They also can be used in mixtures of two or more of such polyisocyanates. In principle, the inventive polyisocyanate mixture can be produced by mixing the inventive polyisocyanate composition based on TEFUDI with one or more of the further polyisocyanates mentioned above.

If desired, it is also possible to add one or more organic solvents which is inert towards isocyanate groups at any stage in or after the mixing process or even as a diluent already to the inventive polyisocyanate composition and/or to at least one of the further polyisocyanates. Suitable organic solvents which are inert towards isocyanate groups can be selected from the aforementioned list of optional solvents for the preparation of the inventive polyisocyanate composition.

Regarding the residual monomeric content, the same limitations do preferably apply for the inventive polyisocyanate composition, in which the total amount of residual monomeric diisocyanates and triisocyanates is less than 1.0% by weight, preferably less than 0.5% by weight and more preferably less than 0.1% by weight, based on the total weight of the polyisocyanate composition. The residual monomeric content is determined by gas chromatography in

accordance with DIN EN ISO 10283:2007-11 with internal standard.

The mixing ratio and, consequently, the weight ratio of the inventive polyisocyanate composition based on TEFUDI with the further polyisocyanate mentioned above can be varied over a large range and is selected based on the desired application. It is however preferred that the polyisocyanate composition based on TEFUDI is one of the main components, amounting to preferably more than 10.0% by weight, more preferably more than 25.0% by weight and most preferred more than 40.0% by weight of the solid content of the total weight of the polyisocyanate mixture.

If organic solvents are used, the solids content of the inventive polyisocyanate composition can be varied within wide limits by choosing the amount of solvent. In this case, it is especially preferred if the polyisocyanate composition according to the invention or the inventive polyisocyanates mixture has a solids content of ≥10.0 and ≤95.0% by weight, preferably ≥25.0 and ≤85.0% by weight.

The invention further relates to a use of the inventive polyisocyanate composition for producing a coating on a substrate, an adhesive or a sealant or to a use of the inventive polyisocyanate composition in a coating, an adhesive or a sealant.

The invention further relates to a use of the inventive polyisocyanate composition for increasing the hardness and/or chemical resistance of a coating on a substrate, wherein the coating is obtained by curing a reaction system comprising the polyisocyanate composition.

The invention further relates to a two-component system containing a component A) comprising the inventive polyisocyanate composition and a component B) comprising at least one NCO-reactive compound.

NCO-reactive compounds of component B) used may be all compounds known to those skilled in the art - including in any desired mixtures with one another - that have an average OH, NH or SH functionality of at least 1.5. These may, for example, be low molecular weight diols (e.g., ethane-1,2-diol, propane-1,3- or -1,2-diol, butane-1,4-diol), triols (e.g., glycerol, trimethylolpropane) and tetraols (e.g., pentaerythritol), short-chain polyamines, but also polyaspartic esters, polythiols and/or polyhydroxy compounds such as polyether polyols, polyester polyols, polyurethane polyols, polysiloxane polyols, polycarbonate polyols, polyether polyamines, polybutadiene polyols and polyacrylate polyols (including, for the purpose of this invention, polyacrylate polyols, polymethacrylate polyols and copolymers thereof).

In a preferred embodiment of the inventive two-component system the at least one NCO-reactive compound is a polyhydroxy compound, preferably a polyether polyol, polyester polyol, polycarbonate polyol and/or polyacrylate polyol.

The inventive two-component system optionally contains auxiliaries and additives, which may for example be cobinders, desiccants, fillers, cosolvents, color or effect pigments, thickeners, matting agents, light stabilizers, coatings additives such as dispersants, thickeners, defoamers and other auxiliaries such as adhesives, fungicides, bactericides, stabilizers or inhibitors and catalysts or emulsifiers which are known to those skilled in the art.

The invention further relates to a one-component system containing

i. the inventive polyisocyanate composition but no or essentially no NCO-reactive compounds, or

ii. a component A) comprising the inventive polyisocyanate composition, wherein all or essentially all free isocyanate groups have been deactivated with one or more blocking agents, and a component B) comprising at least one NCO-reactive compound.

In the first case, it is for example desired to let the inventive polyisocyanate composition react with a reactant that is available at the site of use, e.g., moisture from a gas phase or a substrate to be coated.

In the second case, the deactivated isocyanate groups or the blocked polyisocyanate composition can be produced, for example, by allowing the polyisocyanate composition to react with a blocking agent. Examples of blocking agents include blocking agents of oxime, phenol, alcohol, imine, amine, carbamic acid, urea, imidazole, imide, mercaptan, active methylene, acid amide (lactam) and bisulfites.

Each of the inventive two-component and one-component system can be used as solvent-borne or waterborne system. In this regard, typical solvents selected from the above-mentioned examples or water can be used.

The invention further relates to an article comprising at least one cured inventive two-component system or cured inventive one-component system; or an article at least partly coated with a cured inventive two-component system or cured one-component system. For the purpose of this invention, the term "article" also comprises a shaped body or coating, each obtainable or produced, preferably directly produced, by curing the inventive two-component system or the inventive one-component system, optionally under the action of heat and/or in the presence of a catalyst, as well as a composite component comprising a material that is joined at least to a shaped body or a coating.

The comparative examples and examples which follow are intended to further illustrate the invention without limiting it.

Examples:

All percentages, unless noted otherwise, are to be understood to mean percent by weight.

All reactions were conducted under a nitrogen atmosphere in glass apparatuses dried beforehand under reduced pressure at 150 - 200 °C.

Mol% data or the simple existence of the isocyanurate, iminooxadiazinedione, allophanate, urethane, urea, uretdione, oxadiazinetrione, carbodiimide, thiourethane, thioallophanate and/or biuret structure present in the polyisocyanates were determined by $^{13}C$ NMR spectroscopy and always relate, unless noted otherwise, to the sum total of the NCO conversion products. The measurements were conducted on the Bruker DPX 400 or DRX 700 instruments on approx. 50% ($^{13}C$ NMR) samples in dry $C_6D_6$, unless noted otherwise, at 100 or 176 MHz ($^{13}C$ NMR). The signal of $C_6D_5H$ present in the NMR solvent (7.15 ppm, $^1H$-NMR) or the solvent signal itself (average signal of the 1:1:1 triplet at 128.0 ppm in the $^{13}C$ NMR) were used as reference signal.

Dynamic viscosities were determined at 23 °C using the MCR 501 rheometer (from Anton Paar) in accordance with DIN EN ISO 3219:1994-10. Measurement at different shear rates ensured that Newtonian flow behavior can be assumed. Details regarding the shear rate can therefore be omitted.

The NCO content was determined by titration in accordance with DIN EN ISO 10283:2007-11.

The residual monomer content was determined by gas chromatography in accordance with DIN EN ISO 10283:2007-11 with internal standard.

Starting materials used

| | |
|---|---|
| HDI | Covestro Deutschland AG, Germany |
| IPDI | Covestro Deutschland AG, Germany |
| PDI | Covestro Deutschland AG, Germany |
| Setalux DA 665 BA/X | Acrylic polyol, Allnex GmbH, Germany. It has an OH value of 4.6% (calculated on non-volatiles) and an equivalent weight of 570 g/eq. |
| Byk 3753 | Silicone surface additive, Byk Chemie GmbH, Germany |
| Hostavin 3400 liq | Triazine based UV absorber, Clariant International Ltd, Switzerland |
| Hostavin 3070 P | Oligomeric hindered amine light stabilizer, Clariant International Ltd, Switzerland |
| Solvent Naphtha (SN) 100 | anhydrous, Azelis, Germany |
| Butyl acetate (BA) | Azelis, Germany |

**Characterization of coating films**

For pendulum damping and solvent resistance, the coating materials are applied to a glass panel.

The scratch resistance test and gradient oven test is carried out on a complete build up. For this purpose, before applying the clear coat, the substrate is coated with a 1K OEM waterborne primer surfacer and a 1K OEM base coat (black). Both layers are baked or pre-dried under line baking conditions.

Efflux time: Efflux time was measured with an ISO cup (5 mm diameter) according to DIN EN ISO 2431.

Pendulum damping: The measurement was carried out according to DIN EN ISO 1522 on a glass plate and was determined according to König.

Martens hardness: The measurement was carried out according to DIN EN ISO 14577. Testing procedure:

| | |
|---|---|
| $F_{min}$ 0.4 mN to $F_{max}$ 30 mN | Time: 15 sec |
| CIT1 7 sec | |
| $F_{max}$ 30 mN to $F_{min}$ 0.4 mN | Time: 15 sec |
| CIT2 7 sec | |

Solvent resistance: A small amount of the corresponding solvent is placed in a test tube and fitted with a cottonwool pad at the opening, creating a solvent-saturated atmosphere inside the test tube. The test tubes are then placed with the cotton on the film surface and left there for 1 or 5 minutes. After wiping off the solvent, the film is checked for destruction/softening/loss of adhesion etc. A grading from 0 to 5 is attributed to the film (0 = no change, 5 = film destroyed). The evaluations reported are those for the four solvents in the order in each case of xylene (X), 1-methoxypropyl-2-acetate (MPA), ethyl acetate (EA) and acetone (A) in the form of four successive digits.

Chipping test: The measurement was carried out according to DIN EN ISO 20567-1, Method B.

Wedge Impact test: The measurement was carried out according to DIN EN ISO 20567-2 at -20°C.

Cross-cut test: The measurement was carried out according to DIN EN ISO 2409, blade distance 2mm.

Wet scratch resistance: The wet scratch resistance was tested using a laboratory washing system according to DIN EN ISO 20566. The loss of gloss after scratching (10 cycles) is reported.

Dry Scratch resistance: The dry scratch resistance was tested using a crockmeter according to DIN EN ISO 21546, Abrasion tool A. The loss of gloss after scratching (10 cycles) is reported.

Gradient oven test: The measurement was carried out according to DIN EN ISO 2812-5. Temperature gradient in the oven: 36 °C to 68 °C

FAM test: A cottonwool pad is soaked with FAM solution (Type A as described in DIN 51604-1) and placed on the paint surface for 10 minutes. After wiping off the solvent, the film is checked for destruction/softening/loss of adhesion etc. A grading from 0 to 5 is attributed to the film (0 = no change, 5 = film destroyed).

**Polyisocyanates**

**Polyisocyanate 1 (TEFUDI polyisocyanate,** inventive):

An isocyanurate structures containing 2,5-bis(isocyanatomethyl) tetrahydrofuran (TEFUDI) polyisocyanate was prepared by placing 1057.80 g (5.80 mol) of freshly degassed TEFUDI (70:30 cis/trans mixture) under nitrogen into a three-necked round bottom flask equipped with a nitrogen inlet, thermometer, septum and a magnetic stir bar. The reaction vessel was heated to 60 °C. Subsequently, a 24% catalyst solution of 5-azaspiro[4.5]decan-5-ium fluoride hydrofluoride in 2-ethylhexanol was added dropwise in portions under stirring, resulting in a slightly exothermic reaction. The reaction mixture was stirred until an NCO content of 34.6% was reached and the reaction was stopped by adding an amount equivalent to the amount of catalyst of a 40% strength solution of dodecylbenzenesulfonic acid in isopropanol. The mixture was then worked up by means of thin-film-distillation (0.05 mbar, 150 °C) and the viscous resin obtained was diluted with butyl acetate. The product had the following characteristics and composition:

| | |
|---|---|
| NCO content (80% in BA): | 15.8% |
| monomeric TEFUDI: | <0.1% |
| Viscosity (23 °C, 80% in BA): | 796 mPas |
| Solid content: | 80% |

**Polyisocyanate 2:**

An isocyanurate structures containing hexamethylene diisocyanate (HDI) polyisocyanate was prepared by catalytic trimerization of HDI in accordance with Example 11 of EP-A 330 966, with the modification that the reaction was stopped at an NCO content of the crude mixture of 40% by addition of dibutyl phosphate. Unreacted HDI was then separated off by thin-film distillation at a temperature of 130 °C and a pressure of 0.2 mbar. The product had the following characteristics and composition:

| | |
|---|---|
| NCO content: | 21.7% |
| Monomeric HDI: | 0.1% |
| Viscosity (23 °C) | 3080 mPas |
| Solid content: | 100% |

**Polyisocyanate 3:**

An isocyanurate structures containing pentamethylene diisocyanate (PDI) polyisocyanate was prepared by catalytic trimerization of PDI by the process described in WO 2016/146579 for polyisocyanate component A2). The reaction was deactivated at an NCO content of the crude mixture of 36.7% by adding an equimolar amount of dibutyl phosphate, based on the amount of catalyst used, and stirring at 80 °C for 30 minutes. Unreacted PDI was then separated off by thin-film distillation at a temperature of 140 °C and a pressure of 0.5 mbar. The product had the following characteristics and composition:

| | |
|---|---|
| NCO content: | 21.8% |
| monomeric PDI: | 0.09% |
| Viscosity (23 °C): | 9850 mPas |

(continued)

| | |
|---|---|
| Solid content: | 100% |

**Polyisocyanate 4:**

An isocyanurate structures containing isophorone diisocyanate (IPDI) polyisocyanate was prepared through catalytic trimerization of IPDI in accordance with Example 2 of EP-A-0 003 765. The reaction was deactivated at an NCO content of the crude mixture of 30.1% by addition of an equimolar amount of dibutyl phosphate, based on the amount of catalyst used, and stirring at 80 °C for 30 minutes. Unreacted IPDI was then separated off by thin-film distillation at a temperature of 170 °C and a pressure of 0.3 mbar, and the solid resin obtained was diluted with butyl acetate (BA). The product had the following characteristics and composition:

| | |
|---|---|
| NCO content: | 11.9% |
| monomeric IPDI: | 0.28% |
| Viscosity (23 °C) | 620 mPas |
| Solid content: | 70% |

**Formulations:**

The coating materials are produced by mixing the binders with the additives and stirring at room temperature (Component A). The polyisocyanate (Component B) is then mixed into Component A and stirred at room temperature. Butylacetate / solvent naphtha 100 (1:1) is used for viscosity adjustment.

Formulation examples are shown in Table 1, application results are shown in Table 2 and Table 3.

Table 1. Formulation examples 1 - 4.

| Example | 1 | 2 | 3 | 4 |
|---|---|---|---|---|
| *Component A* | | | | |
| Setalux D A 665 BA/X. | 69.76 | 71.40 | 66.66 | 65.21 |
| BYK-3753 (10% in MPA) | 0.70 | 0.70 | 0.67 | 0.66 |
| Hostavin 3400 liq.(42.5% in MPA) | 3.25 | 3.32 | 3.15 | 3.14 |
| Hostavin 3070 P (40% in MPA) | 1.73 | 1.76 | 1.67 | 1.67 |
| BA/SN 100 (1:1) | 35.00 | 33.00 | 30.00 | 25.00 |
| *Component B* | | | | |
| Polyisocyanat 1 | | | | 30.58 |
| Polyisocyanat 2 | 26.37 | | 21,.08 | |
| Polyisocyanat 3 | | | 6.77 | |
| Polyisocyanat 4 | | 24.16 | | |
| BA/SN 100 (1:1) | 10.00 | 10.00 | 10.00 | 10.00 |
| | | | | |
| Solid content | 45.4% | 47.1% | 46.1% | 46.7% |
| Efflux time ISO cup 5mm | 33 sec | 33 sec | 30 sec | 31 sec |

Table 2. Coating test results on glass panels.

| Example | 1 | 2 | 3 | 4 |
|---|---|---|---|---|
| Tests on glass panel | | | | |
| *Stoving conditions 30 min 80 °C* | | | | |
| Pendulum hardness | 88 s | 112 s | 130 s | 164 s |

(continued)

| Example | 1 | 2 | 3 | 4 |
|---|---|---|---|---|
| Tests on glass panel | | | | |
| *Stoving conditions 30 min 80 °C* | | | | |
| Solvent resistance 1 min | 2244 | 2244 | 3344 | 3344 |
| Solvent resistance 5 min | 4455 | 4455 | 4455 | 4455 |
| *Stoving conditions 30 min 80 °C plus 16 h 60 °C ageing* | | | | |
| Pendulum hardness | 200 s | 201 s | 198 s | 212 s |
| Solvent resistance 1 min | 0011 | 000 1 | 0001 | 0001 |
| Solvent resistance 5 min | 0024 | 0012 | 0 0 12 | 0034 |
| Martens hardness (Surface hardness) | 178 $N/mm^2$ | 189 $N/mm^2$ | 187 $N/mm^2$ | 228 $N/mm^2$ |
| *Stoving conditions 30 min 140 °C* | | | | |
| Pendulum hardness | 182 s | 193 s | 200 s | 205 s |
| Solvent resistance 1 min | 0012 | 000 1 | 0001 | 0000 |
| Solvent resistance 5 min | 0024 | 0002 | 0012 | 0001 |
| *Stoving conditions 30 min 140°C plus 16 h 60°C ageing* | | | | |
| Pendulum hardness | 209 s | 200 s | 205 s | 213 s |
| Solvent resistance 1 min | 00 11 | 000 1 | 0001 | 0000 |
| Solvent resistance 5 min | 0024 | 000 1 | 0012 | 0000 |
| Martens hardness (Surface hardness) | 182 $N/mm^2$ | 189 $N/mm^2$ | 190 $N/mm^2$ | 222 $N/mm^2$ |

**Table 3.** Coating test results on complete build up.

| Example | 1 | 2 | 3 | 4 |
|---|---|---|---|---|
| Tests on complete build up | | | | |
| *Stoving conditions 30 min 80 °C plus 16 h 60 °C ageing* | | | | |
| Chipping test | 1.5 | 1.5 | 1.5 | 1.5-2.0 |
| Wedge Impact at -20 °C | 1 mm | 2 mm | 1.5 mm | 1 mm |
| Cross-cut test 2 mm | 0-1 | 0-1 | 0 | 0 |
| Gradient oven test<br>Tree sap<br>Pancreatine<br>Dist. water<br>NaOH, 1%<br>$H_2SO_4$, 1% | <br>36 / 36<br>36 / 36<br>65 / 65<br>50 149<br>40/40 | <br>36 1 36<br>36 / 36<br>66 / 66<br>46 / 48<br>42/41 | <br>36 / 36<br>36/40<br>61/66<br>56 / 56<br>43 143 | <br>36 / 36<br>40 / 50<br>65 / 68<br>56 / 60<br>42 143 |
| FAM-Test 10 min | 3 | 3 | 3 | 1 |

**Discussion of the results**

As can be seen from Table 2, coating formulations containing TEFUDI polyisocyanates (inventive example 4) show superior performance regarding pendulum and Martens hardness even at low temperature (80 °C), compared to the state-of-the art PU coatings based on HDI, PDI or HDI/IPDI polyisocyanates (comparative examples 1 - 3). Additionally, solvent resistance is at least at the same level when cured at 80 °C (30 min / 30 min + 16 h 60 °C) or even surpasses the performance of comparable formulations (comparative examples 1 - 3) when cured at 140 °C (30 min / 30 min + 16 h 60 °C).

Coating tests with a complete build up (Table 3) show Table 3that the coating comprising the inventive polyisocyanate composition (example 4) has strong advantages in chemical resistances when cured in a gradient oven.

Resistance against pancreatine, water and base (NaOH) is significantly enhanced over the state-of-the art coatings (examples 1 - 3), enabling superior coating performance with the inventive TEFUDI polyisocyanates. In addition to that, the FAM resistance is significantly enhanced in example 4. Further features of the inventive coating like adhesion (cross-cut) and mechanical properties (wedge impact and chipping test) are on a high-level and comparable to those of examples 1 - 3.

## Claims

1. A polyisocyanate composition comprising or consisting of oligomers of 2,5-bis(isocyanatomethyl) tetrahydrofuran, wherein the 2,5-bis(isocyanatomethyl) tetrahydrofuran consists of cis-2,5-bis(isocyanatomethyl) tetrahydrofuran and trans-2,5-bis(isocyanatomethyl) tetrahydrofuran in a weight ratio of 1.0:99.0 to 99.9:0.1.

2. The polyisocyanate composition according to claim 1, wherein the 2,5-bis(isocyanatomethyl) tetrahydrofuran consists of cis-2,5-bis(isocyanatomethyl) tetrahydrofuran and trans-2,5-bis(isocyanatomethyl) tetrahydrofuran in a weight ratio of 50.0:50.0 to 99.9:0.1, preferably, 55:45 to 99.9:0.1, more preferably 60.0:40.0 to 99.5:0.5, even more preferably 65.0:35.0 to 99.0:1.0, most preferably 65.0:35.0 to 90.0:10.0.

3. The polyisocyanate composition according to claim 1 or 2, wherein the oligomers of 2,5-bis(isocyanatomethyl) tetrahydrofuran comprise isocyanurate, iminooxadiazinedione, allophanate, urethane, urea, uretdione, oxadiazinetrione, carbodiimide, thiourethane, thioallophanate, biuret structures or any combination of two or more of the aforementioned.

4. The polyisocyanate composition according to any of claims 1 to 3 further comprising oligomers of a diisocyanate different from cis-2,5-bis(isocyanatomethyl) tetrahydrofuran and trans-2,5-bis(isocyanatomethyl) tetrahydrofuran.

5. The polyisocyanate composition according to any of claims 1 to 4 having an NCO content determined in accordance with DIN EN ISO 11909:2007-05 of from 5.8 to 25.9% by weight, preferably from 7.8 to 24.9% by weight, particularly preferably from 9.7 to 23.9% by weight, based on the total weight of the polyisocyanate composition.

6. The polyisocyanate composition according to any of claims 1 to 5 having a residual monomeric 2,5-bis(isocyanatomethyl) tetrahydrofuran content of less than 1.0% by weight, preferably less than 0.5% by weight and more preferably less than 0.1% by weight, based on the total weight of the polyisocyanate composition.

7. The polyisocyanate composition according to any of claims 1 to 6, wherein all or essentially all free isocyanate groups having been deactivated with one or more blocking agents.

8. A process for preparing the polyisocyanate composition of any of claims 1 to 7 comprising the steps of

    a.i. provision of an isocyanate mixture comprising cis-2,5-bis(isocyanatomethyl) tetrahydrofuran and trans-2,5-bis(isocyanatomethyl) tetrahydrofuran in a weight ratio of 1.0:99.0 to 99.9:0.1,
    a.ii. oligomerization of the isocyanate mixture provided in step a.i, optionally in the presence of at least one catalyst, optionally in the presence of further coreactants selected from the group of alcohols, thiols, amines, water, $CO_2$, or else further isocyanates having an NCO functionality > 1, to obtain the polyisocyanate composition;
    or
    b.i. provision of a first isocyanate composition comprising cis-2,5-bis(isocyanatomethyl) tetrahydrofuran and a second isocyanate composition comprising trans-2,5-bis(isocyanatomethyl) tetrahydrofuran,
    b.ii. oligomerization of the first isocyanate composition provided in step b.i, optionally in the presence of at least one catalyst, optionally in the presence of further coreactants selected from the group of alcohols, thiols, amines, water, $CO_2$, or else further isocyanates having an NCO functionality > 1, to obtain a first oligomerized isocyanate composition,
    b.iii. oligomerization of the second isocyanate composition provided in step b.i, optionally in the presence of at least one catalyst, optionally in the presence of further coreactants selected from the group of alcohols, thiols, amines, water, $CO_2$, or else further isocyanates having an NCO functionality > 1, to obtain a second oligomerized isocyanate composition,
    b.iv. mixture of the first and second oligomerized isocyanate composition obtained in steps b.ii and b.iii, respectively, to obtain the polyisocyanate composition.

9. A polyisocyanate composition obtained or obtainable, preferably directly obtained, by the process of claim 8.

**10.** A use of the polyisocyanate composition according to any of claims 1 to 7 or claim 9 for producing a coating on a substrate, an adhesive or a sealant.

**11.** A use of the polyisocyanate composition according to any of claims 1 to 7 or claim 9 for increasing the hardness and/or chemical resistance of a coating on a substrate, wherein the coating is obtained by curing a reaction system comprising the polyisocyanate composition.

**12.** A two-component system containing a component A) comprising the polyisocyanate composition according to any of claims 1 to 7 or claim 9 and a component B) comprising at least one NCO-reactive compound.

**13.** The two-component system according to claim 12, wherein the at least one NCO-reactive compound is a polyhydroxy compound, preferably a polyether polyol, polyester polyol, polycarbonate polyol and/or polyacrylate polyol.

**14.** A one-component system containing

i. the polyisocyanate composition according to any of claims 1 to 7 or claim 9 but no or essentially no NCO-reactive compounds, or
ii. a component A) comprising the polyisocyanate composition according to claim 7, wherein all or essentially all free isocyanate groups have been deactivated with one or more blocking agents, and a component B) comprising at least one NCO-reactive compound.

**15.** An article

i. comprising a cured two-component system according to claims 12 or 13 or a cured one-component system according to claim 14, or
ii. comprising a substrate and a coating produced from the two-component system according to claims 12 or 13 or the one-component system according to claim 14.

Europäisches Patentamt
European Patent Office
Office européen des brevets

# EUROPEAN SEARCH REPORT

Application Number
EP 24 22 1619

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2023/247525 A1 (COVESTRO DEUTSCHLAND AG [DE]) 28 December 2023 (2023-12-28)<br>* page 16, line 16 - page 17, line 16; examples 1,6 *<br>----- | 1-15 | INV.<br>C08G18/02<br>C08G18/62<br>C08G18/73<br>C08G18/79<br>C09D175/04 |
| E | WO 2024/260965 A1 (COVESTRO DEUTSCHLAND AG [DE]) 26 December 2024 (2024-12-26)<br>* page 6, last paragraph; example 7 *<br>* page 11, paragraph 1 *<br>----- | 1-15 | |

TECHNICAL FIELDS SEARCHED (IPC)

C08G
C09D

The present search report has been drawn up for all claims

1

| Place of search | Date of completion of the search | Examiner |
| --- | --- | --- |
| Munich | 16 May 2025 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 22 1619

This annex lists the patent family members relating to the patent documents cited in the above-mentioned European search report. The members are as contained in the European Patent Office EDP file on
The European Patent Office is in no way liable for these particulars which are merely given for the purpose of information.

16-05-2025

| Patent document cited in search report | Publication date | Patent family member(s) | Publication date |
|---|---|---|---|
| WO 2023247525 A1 | 28-12-2023 | CN 119278196 A | 07-01-2025 |
| | | EP 4296260 A1 | 27-12-2023 |
| | | EP 4543852 A1 | 30-04-2025 |
| | | KR 20250026185 A | 25-02-2025 |
| | | WO 2023247525 A1 | 28-12-2023 |
| WO 2024260965 A1 | 26-12-2024 | EP 4480979 A1 | 25-12-2024 |
| | | WO 2024260965 A1 | 26-12-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 936370 A
- WO 2011098272 A2
- EP 0764633 A2
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- EP 0962454 A
- EP 0962455 A
- EP 2785760 A
- EP 2883895 A
- EP 3107922 A
- EP 3107948 A
- EP 3337836 A
- DE 195409325 A
- WO 2016146579 A
- EP 0003765 A

### Non-patent literature cited in the description

- **H. J. LAAS** ; **R. HALPAAP** ; **J. PEDAIN**. *J. prakt. Chem.*, 1994, vol. 336, 185-200
- *J. Prakt. Chem.*, 1994, vol. 336, 185-200